# EUROPÄISCHE PATENTSCHRIFT

(11) **EP 3 335 565 B1**
(45) Veröffentlichungstag und Bekanntmachung des Hinweises auf die Patenterteilung: **22.04.2020**
(21) Anmeldenummer: 17208259.6
(22) Anmeldetag: 18.12.2017
(51) Int. Cl.: A21B 3/07, A21C 9/08

(54) **TUCHLADER MIT HILFSANTRIEB**
CLOTH TYPE LOADER WITH AUXILIARY DRIVE
CHARGEUR A BANDE TEXTILE POURVU D'UN ENTRAÎNEMENT AUXILIAIRE

(30) Priorität: 16.12.2016 DE 202016107090 U
(43) Veröffentlichungstag der Anmeldung: 20.06.2018
(73) Patentinhaber: Bäckerei Service Peuckmann GmbH & Co.KG, 33415 Verl (DE)
(72) Erfinder: Peuckmann, Jakob, 33415 Verl (DE)
(74) Vertreter: Misselhorn, Hein-Martin

(56) Entgegenhaltungen:
- WO-A2-2007/051645
- DE-B- 1 197 043
- DE-U1-202008 014 112

## Beschreibung

Die Erfindung betrifft einen Tuchlader nach dem Oberbegriff des Anspruchs 1.

### TECHNISCHER HINTERGRUND

Überall dort, wo nicht in Durchlauf-Backöfen große Stückzahlen gebacken werden, haben sich in den Bäckereien sogenannte Etagenöfen durchgesetzt. Ein solcher Etagenofen weist eine Mehrzahl von Einschüben auf, kann also in einer Mehrzahl von Ebenen Teiglinge bzw. die daraus herzustellenden Backwaren aufnehmen. Die Einschübe können jeweils durch Einschieben eines Backblechs mit Teiglingen beschickt werden. Die Verwendung von Backblechen ist relativ platzaufwendig und auch insoweit nachteilig, als die Backbleche turnusmäßig gereinigt werden müssen.

In der Vergangenheit ist vermehrt dazu übergegangen worden, die Teiglinge auf im Ofen angebrachte und dort verbleibende Platten zu schieben, insbesondere auf Steinplatten. Das reduziert die Anzahl der erforderlichen Backbleche. Zudem haben die mit Steinplatten bestückten Öfen den Vorteil, dass die Kruste der auf Steinplatten ausgebackenen Backwaren wesentlich dicker werden kann. Hierdurch bleiben die Backwaren länger backfrisch und knusprig.

Sofern das Be- und Entladen solcher Öfen nicht rein händisch erfolgen kann, weil der Backgutumschlag höher ist, kommen sogenannte Tuchlader zum Einsatz. Ein Tuchlader arbeitet mit einem oder mehreren dünnen und meist an ihrem vorderen Ende keilförmig angespitzten Trägern. Diese Träger halten jeweils ein Tuch aufgespannt. Das Tuch kann bei Bedarf so angetrieben werden, dass es dann nach Art eines Förderbandes um den Träger umläuft. Ein so ausgestatteter Träger wird nachfolgend als Tuchschieber bezeichnet.

Mit einem derartigen Tuchlader kann beispielsweise eine Charge Teiglinge von der Ladefläche eines Gärwagens abgenommen werden, wo die Teiglinge zum Aufgehen geruht haben. Der an seinem vorderen Ende keilförmig angespitzte Tuchschieber wird mit der Spitze unter die reihenweise auf dem Gärwagen aufgelegten Teiglinge geschoben. Das Tuch läuft in Gegenrichtung zu der Einschiebebewegung mit etwa gleicher Geschwindigkeit um. Dadurch werden die von der Spitze erfassten Teiglinge von dem Tuch mitgenommen und auf den Tuchschieber gezogen, anstatt vom Tuchschieber unkontrolliert vor sich hergeschoben zu werden.

Sodann wird der Tuchlader beispielsweise vom Gärwagen zum Ofen gefahren. Die Ofenklappe wird geöffnet und der Tuchschieber wird vollständig in den Ofen eingefahren. Dann wird das Tuch angetrieben und der Tuchschieber in Gegenrichtung zurückgezogen. Hierdurch werden die Teiglinge von dem Tuch abgeschoben und auf der Ladefläche des Ofens abgelegt. Wenn der Backvorgang beendet ist, wird das fertige Backgut in gleicher Art und Weise wieder aufgenommen, wie zuvor am Beispiel des Aufnehmens der Teiglinge vom Gärwagen geschildert.

Ein solcher Tuchlader ist vom Prinzip her bereits aus der Gebrauchsmusteranmeldung DE 20 2004 011 473 U1 bekannt. Bei diesem bekannten Tuchlader wird der Etagenofen dadurch beschickt, dass nacheinander in jede Ebene des Etagenofens ein einzelner Tuchschieber eingefahren wird. Dieser setzt dann dort in der soeben geschilderten Art und Weise die Teiglinge ab und nimmt sie später auch wieder in der beschriebenen Art und Weise als fertiges Backgut auf.

Aus der DE 20 2008 014 112 U1 ist eine Vorrichtung zum Verfahren von Tuchabziehapparaten auf einem Beschickungswagen bekannt. An jedem Tauchabziehapparat ist ein erstes Kupplungsglied vorgesehen, welches mit einem zweiten an einem motorischen Antrieb angeordneten Kupplungsglied lösbar kuppelbar ist. Damit können nacheinander die Tuchabziehapparate mit dem motorischen Antrieb betätigt werden.

Der bekannte Tuchlader ist zumindest bei größeren Etagenöfen nachteilig. Denn dadurch, dass die Tuchschieber nacheinander in den Etagenofen eingeschoben werden und dann dort die Teiglinge aufnehmen oder absetzen müssen, ergibt sich eine relativ lange Öffnungszeit der Ofenklappe. Das verbraucht nicht nur unnötig Energie, sondern birgt vor allem die Gefahr, dass die Qualität des Backguts leidet - insbesondere auch beim Entladen. Denn hier ist es so, dass das Backgut, das in den Etagen des Etagenofens liegt, die erst später entladen werden, länger der Hitze ausgesetzt ist und unter Umständen mehr an Feuchtigkeit verliert als das Backgut, welches als erstes entnommen wurde.

Um diesem Problem abzuhelfen, sind bereits Tuchlader konzipiert worden, bei denen alle Tuchschieber gemeinsam in den Etagenofen eingeschoben und wieder aus diesem herausgezogen werden.

Bei Tuchladern für größere Etagenöfen hat sich dabei als nachteilig herausgestellt, dass die Vielzahl der miteinander gekoppelten und daher mitsamt des auf sie aufgelegten Guts gemeinsam zu bewegenden Tuchschieber eine relativ hohe träge Masse besitzt. Der Bediener muss also relativ viel Kraft aufwenden, um die miteinander gekoppelten Tuchschieber in Gang zu setzen. Gleichzeitig muss er beim Einschieben umsichtig vorgehen und die gemeinsam bewegten Tuchschieber rechtzeitig genug wieder abbremsen. Denn die Tuchschieber dürfen insbesondere beim Beladen im Ofen nicht "hart auf Anschlag gehen" und dadurch jäh stoppen, weil das die Gefahr birgt, dass die Teiglinge verrutschen. Letzteres würde unter Umständen zu massiven Qualitätseinbußen führen, etwa wenn benachbarte Brötchen oder Brezeln mit zu wenig Abstand voneinander abgelegt werden und dann ungewollt miteinander verbacken.

Zur Lösung dieses Problems sind alternativ vollmotorisierte bzw. vollautomatische Tuchlader im Einsatz. Solche Tuchlader sind mit einem Antrieb versehen. Dieser setzt die miteinander gekoppelten Tuchschieber gemeinsam in Bewegung und hält die Tuchschieber elektronisch gesteuert, genau an der erforderlichen Stelle im Etagenofen an. Nachteilig an derartigen automatischen Tuchladern ist, dass sie vergleichsweise teuer sind. Ein Grund hierfür ist die relativ aufwendige Elektronik, die erforderlich ist, um die vollautomatische Bewegung der Tuchlader hinreichend genau zu steuern - indem rechtzeitig erkannt wird, dass die sich bewegenden Tuchschieber in Kürze eine ihrer Endlagen erreichen und daher gestoppt werden müssen.

Die Elektronik ist nicht zuletzt deswegen teuer, weil sie im Laufe der langen Einsatzzeit eines Tuchladers unzählige Temperaturwechsel aushalten muss, denn die Tuchschieber heizen sich ja jedes Mal, wenn sie in den Etagenofen eingeschoben werden, auf.

### DAS DER ERFINDUNG ZUGRUNDE LIEGENDE PROBLEM

Vor diesem Hintergrund liegt der Erfindung die Aufgabe zugrunde, einen Tuchlader zu schaffen, der einfach und sicher bedient werden kann und gleichzeitig eine geringere Komplexität aufweist als bekannte vollautomatische Systeme, weshalb er günstiger herzustellen ist.

### DIE ERFINDUNGSGEMÄSSE LÖSUNG

Die erfindungsgemäße Lösung erfolgt mit einem Tuchlader nach Maßgabe des Anspruchs 1.

Es wird ein Tuchlader für das Absetzen und Wiederaufnehmen von Teiglingen auf der Ladefläche eines Backofens, eines Gärschranks und/oder eines Ladewagens vorgeschlagen, der ein Grundgestell aufweist. An diesem Grundgestell ist mindestens ein relativ zu ihm verschiebbarer Tuchschieber gelagert. Der Tuchschieber ist so gelagert und an dem Grundgestell gehalten, dass er vom Bedienungspersonal zwischen zwei Extrempositionen verschoben werden kann. Eine dieser Extrempositionen ist die maximal eingefahrene Transportposition, in der sich der Tuchschieber vollständig oder im Wesentlichen in dem Grundgestell befindet. Die andere Extremposition ist die maximal ausgefahrene Ladeposition, in der er die Ladefläche des Backofens oder dergleichen übergreift, um dort mehrere Teiglinge abzusetzen und/oder abzuholen.

Der erfindungsgemäße Tuchlader zeichnet sich durch seinen elektrischen Hilfsantrieb für seinen mindestens einen Tuchschieber aus. Der elektrische Hilfsantrieb wird durch das manuelle Verschieben des mindestens einen Tuchschiebers aktiviert. Er trägt dann dazu bei, den Tuchschieber in die durch die händische Kraft vorgegebene Richtung zu bewegen und unterstützt die mit dem erfindungsgemäßen Tuchlader arbeitende Person.

Der erfindungsgemäße Tuchlader hat gegenüber den bekannten rein händisch betätigten Tuchladern den großen Vorteil, dass er die Arbeit wesentlich erleichtert und auch sicherer macht - denn insbesondere eine Gruppe von Tuchschiebern mit einem beträchtlichen Kraftaufwand in einen offenen heißen Ofen einzuschieben, birgt unvermeidlich eine gewisse Gefahr - etwa die Gefahr, dass der Bediener abrutscht und dadurch unbeabsichtigt mit heißen Ofenteilen in Kontakt kommt.

Der erfindungsgemäße Tuchlader hat gegenüber den alternativen vollmotorisierten Tuchladern den Vorteil, dass der Aufwand für die Steuerung seines Antriebs wesentlich geringer ist, was zu einer entscheidenden Kostensenkung führt. Dies deshalb, weil die Notwendigkeit einer komplexen Elektronik, die erkennt, wenn sich der Tuchschieber einer seiner Endlagen nähert und dann mit angemessener Stärke von alleine entsprechend bremst, entfällt. Denn diese Steuerungsaufgabe übernimmt bei dem erfindungsgemäßen Tuchlader nach wie vor der Bediener - der beim Einschieben der Tuchschieber sofort spürt und somit wesentlich einfacher als eine elektronische Steuerung erkennt, wie schwer beispielsweise im konkreten Fall die Beladung ist, und dass deshalb früher oder später schwächer oder stärker gebremst werden muss, wenn die Endlage im Ofen erreicht wird.

Unter einem Hilfsantrieb ist ein Antrieb zu verstehen, der die zum Bewegen des oder der Tuchschieber erforderliche Energie nicht vollständig allein aufbringt, sondern vorzugsweise nur zu maximal 90 %, besser nur zu maximal 70 %.

Der erfindungsgemäße Tuchlader kann dadurch bei Bedarf so ausgelegt werden, dass sein Antrieb schwächer dimensioniert ist als derjenige eines vollmotorisierten Tuchladers, da die Bedienungsperson einen Teil der erforderlichen Bewegungsenergie beisteuert. Dieser Aspekt ist zum einen unter Kostengesichtspunkten vorteilhaft. Das ist zum anderen aber auch dann sehr attraktiv, wenn beispielsweise ein Akkubetriebener und dadurch hochmobiler Tuchlader verwirklicht werden soll, der von Ofen zu Ofen und zu verschiedenen Lagerstätten gefahren werden kann.

Der Begriff "Tuch" hat im Zusammenhang mit der Erfindung eine engere und eine weitere Bedeutung. Im engeren Sinne wird hiermit tatsächlich eine zumindest abschnittweise nach Art eines Förderbandes umlaufende Gewebe- oder Folienschlaufe bezeichnet. Im weiteren Sinne fällt aber jedes generell zur Bildung eines Förderbandes geeignete Trum unter diesen Begriff.

### VORTEILHAFTE AUSGESTALTUNGSMÖGLICHKEITEN

Besonders günstig ist es, wenn der Tuchschieber mit einem mobilen Fahrgestell ausgestattet ist, das ein freies, nichtgleisgeführtes Verschieben des Tuchladers zwischen verschiedenen Einsatzorten ermöglicht. Zweckmäßigerweise sind mindestens zwei der Räder des Tuchladers zum Be- und Entladen blockierbar, vorzugsweise mittels eines einzigen Pedals. Optional ist die im Folgenden noch näher erläuterte Antriebssteuerung so ausgestaltet, dass sie den Tuchlader selbstständig mit seiner Bremse festsetzt, sobald sie detektiert, dass mindestens ein Tuchschieber gegenüber dem Grundgestell in Bewegung gesetzt wird.

Idealerweise weist der Tuchlader einen Sensor auf, der die an einem Griff beim händischen Verschieben des mindestens einen Tuchschiebers aufgebrachte Kraft erkennt. Dessen kraftabhängiges Signal setzt dann den Hilfsantrieb in Gang. Das heißt, der Hilfsantrieb wird eingeschaltet, wenn Kraft am Griff anliegt, und wieder ausgeschaltet, sobald keine Kraft am Griff mehr anliegt. Auf diese Art und Weise lässt sich eine intuitive Bedienbarkeit erreichen. Im unmittelbaren Zusammenhang damit, dass der Benutzer beginnt, den mindestens einen Tuchschieber mittels des dafür vorgesehenen Griffs zu verschieben, spürt er, wie ihn der Hilfsantrieb unterstützt und wie er den Hilfsantrieb auch wieder ausschalten kann, indem er nicht länger auf den Griff einwirkt. Damit ist ihm die Funktion sofort klar, auch ohne dass er erst länger eingewiesen werden muss oder entsprechende Piktogramme an der Maschine verstanden haben muss. Der Begriff Sensor schließt hier nicht aus, dass in den Sensor eine eigene elektronische Steuerung integriert ist. Das heißt nichts anderes, als dass die nachfolgend näher zu erläuternde elektronische Antriebssteuerung auch aus mehreren, räumlich voneinander getrennten Komponenten bestehen kann. Im Regelfall liefert der Sensor ein bidirektionales Signal, welches dazu führt, dass der Hilfsantrieb stets in die Richtung dreht, dass er die aktuelle Einschiebebewegung unterstützt. Der Sensor steuert also im Regelfall zumindest auch den Rechts- /Linkslauf des Hilfsantriebs - indem zumindest beim Anfahren entschieden wird, ob der Motor linksdrehend oder rechtsdrehend in Gang gesetzt wird.

Besonders günstig ist es, wenn der Tuchlader eine elektronische Antriebssteuerung besitzt, die den Hilfsantrieb über das erstmalige Ein- und Wiederausschalten hinaus in Abhängigkeit von dem Sensorsignal beeinflusst. Zu diesem Zweck wird das Sensorsignal nicht nur qualitativ zum Ein- und Wiederausschalten benutzt, sondern kommt auch quantitativ zum Einsatz. Ein stärkeres Sensorsignal, das durch höhere in Verschieberichtung am Griff angreifende Kräfte erzeugt wird, signalisiert der elektronischen Antriebssteuerung, dass eine Beschleunigung gewünscht ist und veranlasst diese dazu, den Motor entsprechend anzusteuern. Ein schwächeres Sensorsignal, das durch geringere in Verschieberichtung am Griff angreifende Kräfte erzeugt wird, signalisiert der elektronischen Antriebssteuerung, dass eine langsamere Bewegung gewünscht ist und veranlasst diese, das Motordrehmoment zu verringern.

Im Idealfall ist der Sensor so ausgelegt, dass er ein Signal liefert, welches - meist unter Berücksichtigung der Informationen zur momentanen Antriebsrichtung - Rückschlüsse darauf zulässt, ob an dem zum Verschieben des Tuchschiebers vorgesehenen Griff gedrückt wird, um den Tuchschieber zu beschleunigen, oder gezogen wird, um den Tuchschieber zu verzögern. Das ist besonders dann günstig, wenn der elektrische Motor des Antriebs so ausgerüstet ist, dass er einen Mehrquadrantenbetrieb erlaubt und dadurch eine aktive Bremsung ausgelöst werden kann, sobald der Sensor ein Signal ausgibt, das den Rückschluss darauf zulässt, dass der Bediener so an dem Griff zieht oder drückt, dass daraus der Wunsch abgeleitet werden kann, die aktuelle Bewegung zu verlangsamen.

Besonders günstig ist es, wenn die elektronische Antriebssteuerung den Hilfsantrieb nur mit Verzögerung beeinflusst, also nur langsamer, als das eigentlich nach der elektronischen Ausstattung der Antriebssteuerung möglich ist. Um in der Praxis ein angenehmes Arbeiten ohne abrupte Bewegungen sicherzustellen, hat es sich als zweckmäßig erwiesen, wenn die elektronische Antriebssteuerung nicht jede Änderung des Sensorsignals sofort in eine Beschleunigung oder Verzögerung des Antriebs umsetzt. Alternativ kann die Auslegung auch so sein, dass die elektronische Antriebssteuerung den Hilfsantrieb zwar sofort beeinflusst, aber nur an- und abschwellend. Das bedeutet, dass die elektronische Antriebssteuerung zwar sofort aktiv wird und den Antrieb in Gang setzt, wenn über den Sensor der Versuch registriert wird, den Tuchschieber zu beschleunigen. Dabei wird jedoch nicht sofort das volle Drehmoment des Motors aktiviert. Stattdessen wird zunächst sanft angefahren und das Motordrehmoment weiter erhöht, wenn der Versuch, den Tuchschieber zu beschleunigen, anhält. Vorzugsweise wird ähnlich mit über den Sensor erkannten Versuchen umgegangen, den Tuchschieber händisch abzubremsen.

Zweckmäßigerweise ist der Tuchlader mit mindestens einem Endlagengeber ausgerüstet, der vom mindestens einen Tuchschieber in seiner Endlage oder im Nahbereich seiner Endlage aktiviert wird. Das Signal des Endlagengebers deaktiviert den Hilfsantrieb. Die Mindestfunktion des Endlagengebers ist die, zu verhindern, dass der Antrieb weiter voll bestromt wird, wenn der mindestens eine Tuchschieber sich nicht weiter in die Richtung bewegen kann, die der am Griff nach wie vor anstehenden Kraft entsprechen würde. Auf diese Art und Weise wird Strom gespart, was insbesondere für den optionalen Akkubetrieb bedeutend ist, bzw. eine Überhitzung des Antriebs vermieden. Diese Funktion ist beispielsweise auch gerade dann von Bedeutung, wenn auf den Griff, an dem der mindestens eine Tuchschieber geschoben werden soll, aus unvorhergesehenen Gründen dauerhaft eine nicht vom Bediener ausgeübte Kraft einwirkt. Letzteres kann etwa dann der Fall sein, wenn der Tuchlader so dicht an irgendeinem anderen Gerät abgestellt ist, dass dieses gegen den Griff drückt. Besonders günstig ist es, wenn das Signal der Endlagengeber dazu genutzt wird, den Hilfsantrieb rechtzeitig stillzusetzen oder gar bremsend wirken zu lassen, um so sicherzustellen, dass der mindestens eine Tuchschieber seine aktuelle Bewegung im Wesentlichen oder vollständig beendet hat, bevor er gegen den seine Bewegung mechanisch begrenzenden Anschlag anläuft.

Besonders günstig ist es, wenn der Tuchlader einen Akku aufweist, der seinen Hilfsantrieb und vorzugsweise auch seine elektronische Antriebssteuerung speist. Denn hierdurch wird ein besonders mobiler Tuchlader geschaffen. Dies ist gerade für kleinere Bäckereien von erheblicher Bedeutung. Denn der Tuchlader kann frei in der Bäckerei hin- und hergefahren werden, um Teiglinge oder Backgut von verschiedenen Orten abzuholen und zu verschiedenen Orten zu bringen.

Im Idealfall ist der Akku ein Tandem-Akku aus zwei parallel geschalteten Akkus mit gleicher Nennspannung, zum Beispiel zwei 24 V-Akkus. Das hat den erheblichen Vorteil, dass einer der Akkus 1:1, ohne Zwischenschaltung eines Spannungswandlers, zur Spannungsversorgung des Logik-Teils der elektronischen Antriebssteuerung dienen kann, während der Motor für eine Nennspannung von 48 V ausgelegt sein kann und daher kompakter baut. Alternativ ist ein Spannungswandler vorgesehen, der die Nennspannung eines Solitärakkus bzw. -akkupacks (beispielsweise 48 V) herabsetzt, beispielsweise auf stabilisierte 24 V, die für den Logik-Teil der elektronischen Antriebssteuerung erforderlich sind.

Idealerweise besitzt die elektronische Antriebssteuerung eine Zusatzstromquelle, meist ebenfalls in Gestalt eines Akkus, die sie im Falle der Entleerung des auch den Antrieb speisenden Akkus vor Datenverlust schützt.

Im Rahmen einer besonders weiterentwickelten Ausführungsform ist vorgesehen, dass der Hilfsantrieb vom Bediener mit mindestens einem Rad am Grundgestell des Tuchladers gekoppelt werden kann, um den Tuchlader als Ganzen motorisch oder motorunterstützt von einem Ort zum anderen fahren zu können.

### FIGURENLISTE

Vorab ist rein erläuternd (ohne Einfluss auf den Schutzbereich) zu den Figuren anzumerken, dass alle mit einer Pfeilspitze markierten Bezugslinien eine Einheit bezeichnen, die sich aus mehreren ihrerseits mit unterschiedlichen Bezugszeichen gekennzeichneten Einzelteilen zusammensetzt, während pfeillose Bezugszeichenlinien auf ein Einzelteil deuten.
Die Figur 1 zeigt ein Ausführungsbeispiel des erfindungsgemäßen Tuchladers perspektivisch schräg von oben gesehen.
Die Figur 2 zeigt das erste Ausführungsbeispiel gemäß Figur 1, aber in einem Zustand, bei dem die Tuchschieber beispielsweise in einen hier nicht gezeigten Ofen eingefahren sind.
Die Fig. 3 zeigt eine Prinzipdarstellung eines Tuchladers.
Die Figur 4 zeigt eine Vergrößerung der Figur 1 aus einem etwas anderen Blickwinkel und unter Verzicht auf die Darstellung der Tuchschieber.
Die Figur 5 zeigt den Tuchlader gem. Fig. 4, frontal von vorne.
Die Figur 6 zeigt eine ausschnittweise Detailansicht des Tuchladers gem. Fig. 1.
Die Figur 7 eine ausschnittweise Detailansicht des Tuchladers gem. Fig. 1 von der Seite her gesehen.
Die Fig. 8 zeigt den erfindungsgemäß zur Steuerung des Hilfsantriebs zum Einsatz kommenden Griff in perspektivischer Ansicht.
Fig. 9 zeigt den Griff gem. Fig. 8 frontal von vorne.
Fig. 10 zeigt ein zweites Ausführungsbeispiel des erfindungsgemäßen Tuchladers im eingefahrenen Zustand.
Fig. 11 zeigt ein zweites Ausführungsbeispiel des erfindungsgemäßen Tuchladers im ausgefahrenen Zustand.
Fig. 12 verdeutlicht den speziellen Antriebshilfsrahmen 12 des zweiten Ausführungsbeispiels und seine Führung an dem Etagenwagen.
Fig. 13 zeigt weitere Einzelheiten gem. Fig. 12.

### AUSFÜHRUNGSBEISPIEL

### ERSTES AUSFÜHRUNGSBEISPIEL

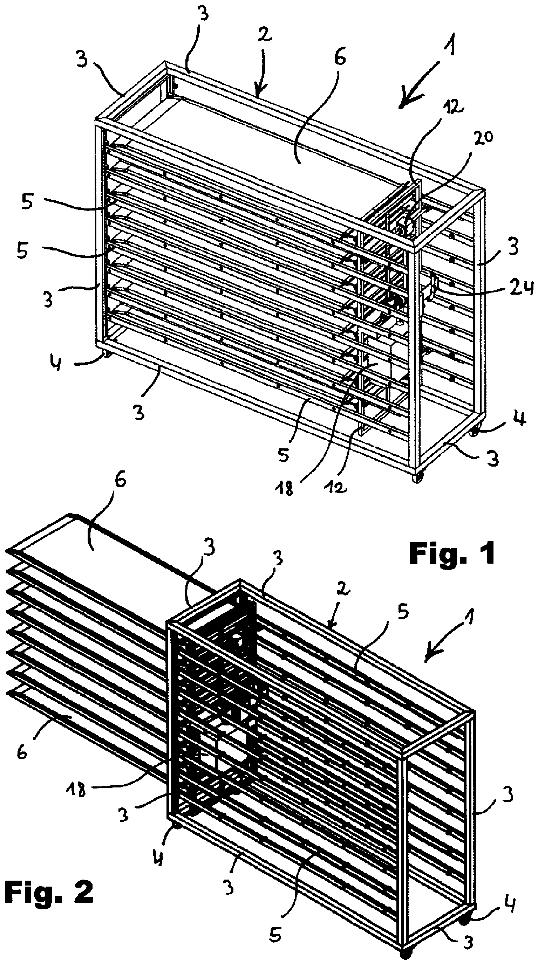

Die Figuren 1 und 2 veranschaulichen zunächst das Grundprinzip des erfindungsgemäßen Tuchladers 1.

Gut zu erkennen in Fig. 1 ist das Grundgestell 2. Dieses ist vorteilhafterweise als Quader ausgebildet, im vorliegenden Fall vorzugsweise so, dass seine Erstreckung in Ofeneinschubrichtung um mindestens 50 % größer ist als in Querrichtung senkrecht dazu. Das Grundgestell 2 bildet hier einen Etagenwagen, an dem eine Mehrzahl von Tuchschiebern 6 übereinander angeordnet ist. Das Grundgestell 2 wird vorzugsweise aus Stangen bzw. Rohren 3 gebildet und bildet im letzteren Fall einen quaderförmigen Rohrrahmen aus. Die einzelnen Stangen verlaufen dann entlang der bzw. aller Seitenkanten des den Rohrrahmen bildenden Quaders und sind an ihren Kontaktpunkten miteinander verbunden, meist miteinander verschweißt. An der Unterseite ist der quaderförmige Rohrrahmen mit Rädern 4 versehen, vorzugsweise in Gestalt von lenkbaren Rollen, die zumindest teilweise einen mit dem Fuß zu betätigenden Feststeller aufweisen können.

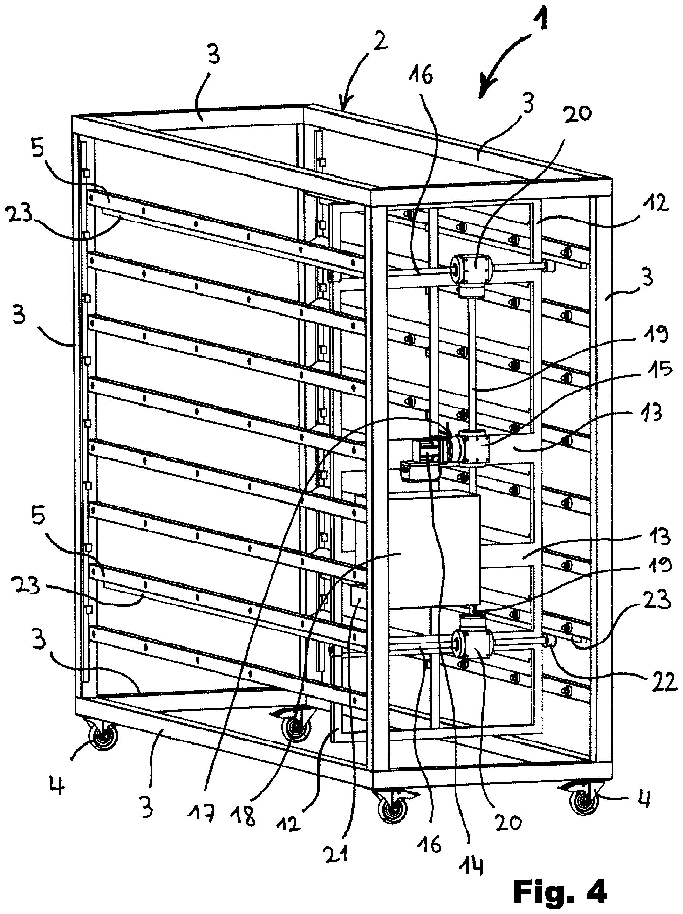

Wie man am besten anhand der Figuren 1 und 2 sieht, ist das Grundgestell 2 zusätzlich mit horizontalen Führungsstangen 5 versehen, an zwei sich beidseitig einer vertikalen Ebene gegenüberliegenden Seiten. Die Führungsstangen 5 liegen sich ausweislich der Figur 4 paarweise gegenüber. An den Führungsstangen 5 sind Tuchschieber 6 relativbeweglich zum Grundgestell 2 gelagert bzw. geführt. Idealerweise laufen die Tuchschieber 6 mit entsprechenden Rollen - zumindest auch - auf der Oberseite der Führungsstangen. Aufgrund dessen können die Tuchschieber 6 zwischen ihren Extrempositionen hin- und hergefahren werden.

Eine dieser Extrempositionen ist die maximal eingefahrene Transportposition, die die Figur 1 zeigt. Hierbei sind die Tuchschieber vollständig im oder zumindest im Wesentlichen innerhalb des Grundgestells 2 angeordnet. In dieser Position kann der Tuchlader als Ganzer, mit oder ohne Backgut bzw. Teiglingen auf den Tuchschiebern, von einem Ort zum anderen gefahren werden.

Die andere Extremposition ist die maximal ausgefahrene Ladeposition, die die Figur 2 zeigt. Die Tuchschieber sind hier vollständig aus dem Grundgestell 2 ausgefahren und ragen in die einzelnen Etagen eines hier nicht zeichnerisch dargestellten Etagenbackofens oder Etagenwagens hinein. Jeder Tuchschieber übergreift eine Ladefläche des Backofens oder Etagenwagens, um dort mehrere Teiglinge abzusetzen und/oder Gebäckstücke abzuholen.

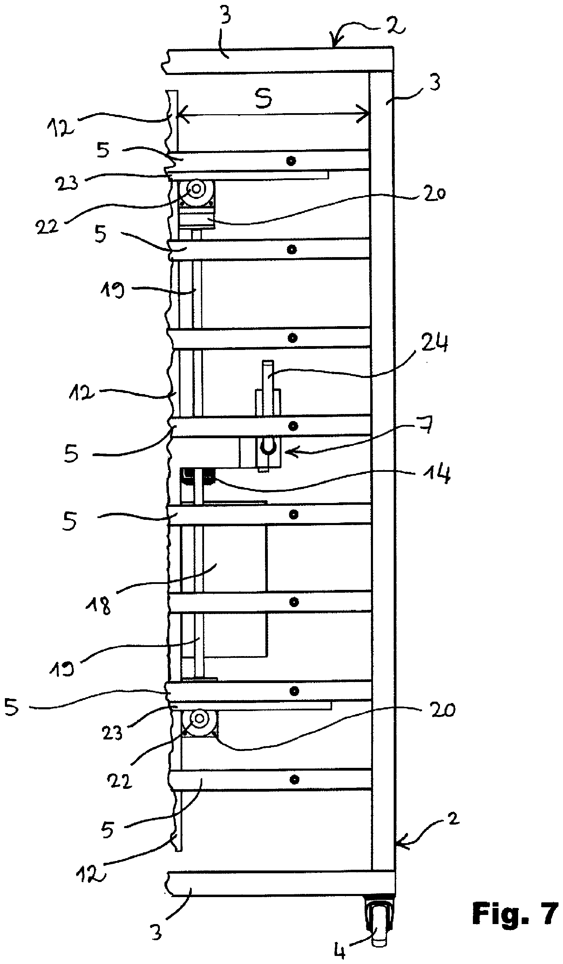

Bemerkenswert ist die Tatsache, dass die Tuchschieber 6 mit aufgesetztem Hilfsrahmen 12, in Einschubrichtung gesehen, um eine Sicherheitslänge S kürzer sind als das sie tragende Grundgestell 2, vgl. Fig. 7. Diese Sicherheitslänge S bzw. Längendifferenz ist so ausgestaltet, dass die Tuchschieber 6 mit aufgesetztem Hilfsrahmen 12 auch in ihrer maximal eingefahrenen Transportposition, die die Figur 1 zeigt, hinreichenden Abstand zum vertikalen Rohr 3 des Grundgestells 2 aufweisen, um einklemmfreien Platz für mindestens einen, besser zwei Arme des Bedieners zu lassen, der zwischen zwei horizontalen Führungsstangen 5 hindurch den Griff 7 festhält, um an ihm zu drücken oder zu ziehen.

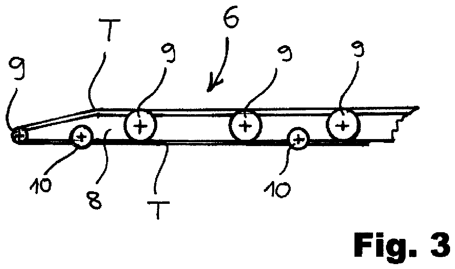

Die prinzipielle Funktion eines Tuchschiebers 6 lässt sich am besten anhand der Figur 3 erkennen. Gut zu sehen ist der Tuchschieberrahmen 8, an dem Tuchumlenkrollen 9 gelagert sind, und der vorzugsweise eine meist keilförmige Spitze aufweist. Meist trägt der Tuchschieberrahmen Laufrollen 10.

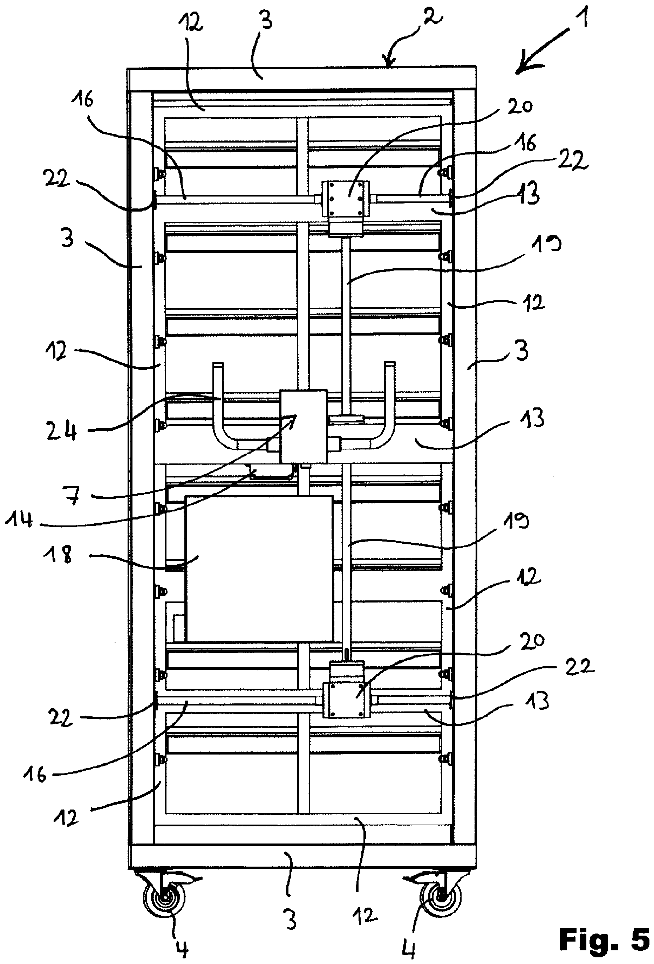

Der erfindungsgemäß vorzusehende Hilfsantrieb 17 lässt sich am besten anhand der Figur 4 und 5 erläutern. Zu beachten ist, dass die Fig. 4 den Antriebshilfsrahmen 12 bei von ihm abgenommenem Griff zeigt, anders als Fig. 5.

Sofort ins Auge fällt, wie gesagt, der Antriebshilfsrahmen 12.

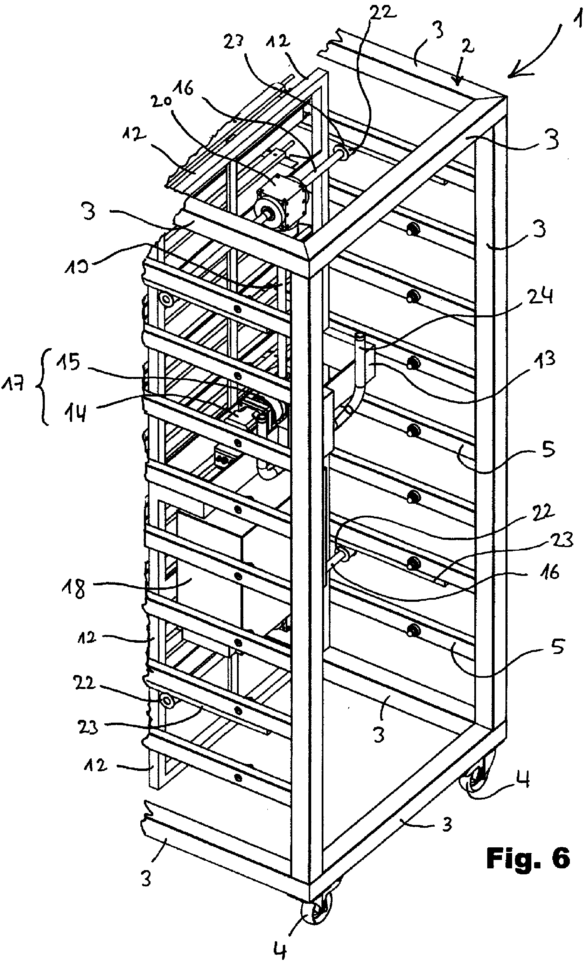

Hierbei handelt es sich vorzugsweise um eine Konstruktion aus Stangen bzw. idealerweise Rohren, die zu einem Rahmenrechteck verbunden, meist verschweißt, sind. Der Antriebshilfsrahmen 12 ist im Regelfall vertikal im Grundgestell 2 angeordnet. Es können leiterartige Zwischenträger 13 vorgesehen sein. Der Antriebshilfsrahmen 12 ist an den in Figur 4 nicht gezeigten Tuchschiebern 6 befestigt und zwar im Regelfall an deren der Be- und Entladestirnseite abgewandten Stirnseite, vgl. auch Fig. 6. Er wird von ihnen in Position gehalten und verbindet sie zu einer gemeinsam verschiebbaren Einheit. Der Antriebshilfsrahmen 12 fährt zusammen mit den Tuchschiebern 6 hin- und her, ist also gegenüber dem Grundgestell 2 relativbeweglich.

Der Antriebshilfsrahmen 12 trägt den Hilfsantrieb 17, der zumindest aus einem Motor 14, einem als Untersetzungsgetriebe ausgestalteten Getriebe 15 und zumindest einer, besser zwei Antriebswellen 16 besteht - wie hier gezeigt. Hinzu kommt in der überwiegenden Zahl der Fälle eine elektronische Antriebssteuerung 18, die ebenfalls vom Antriebshilfsrahmen 12 getragen wird. Im konkreten Ausführungsbeispiel kommen eine Zentralwelle 19 und zwei Winkelgetriebe 20 hinzu, die die Verbindung zwischen der Zentralwelle 19 und den beiden Antriebswellen 16 herstellen. Eine solche Konstruktion mit zwei Antriebswellen und vorzugsweise vier mit dem Grundgestell 2 interagierenden Rollen bzw. Ritzeln 22 gewährleistet ein gleichmäßiges Bewegen, bei dem die bewegungsbedingten Kräfte sehr gut verteilt vom Grundgestell 2 abgefangen werden, so dass dieser leicht gebaut werden kann.

Darüber hinaus trägt der Antriebshilfsrahmen 12 im konkreten Fall auch den Akku 21, der hier den Hilfsantrieb 17 und die elektronische Antriebssteuerung 18 mit Strom versorgt.

Schließlich trägt der Antriebshilfsrahmen vorzugsweise auch den Griff 7, idealerweise mit Hilfe eines Zwischenträgers 13, hinter dem der Motor 14 und das Untersetzungsgetriebe 15 angebracht sind, so dass Motor und Antrieb in Schieberichtung im Wesentlichen hinter dem Griff 7 liegen.

Der Motor 14 ist vorzugsweise ein permanentmagneterregter Gleichstrommotor. Seine Drehzahl- bzw. Drehmoment-Steuerung erfolgt vorzugsweise über mindestens einen elektronischen Leistungsschalter, der von der elektronischen Antriebssteuerung angesteuert wird und im Regelfall eine Pulsmodulation des Motorspeisestroms vornimmt. Schließlich trägt der Antriebshilfsrahmen 12 auch den Griff 7, dessen Belastung das Signal zur Steuerung des Hilfsantriebs erzeugt. All diese Bauteile fahren zusammen mit dem Antriebshilfsrahmen 12 gegenüber dem Grundgestell 2 hin- und her.

Die beiden freien Enden jeder Antriebswelle 16 sind jeweils mit einem Rad bzw. Reibrad oder einem Ritzel versehen, das drehmomentfest auf diesen Enden befestigt ist. Wie schon oben angeklungen ist, werden im vorliegenden Fall Ritzel 22 verwendet. Die Ritzel 22 greifen in Zahnstangen 23 ein, die an mehreren der horizontalen Führungsstangen 5 befestigt sind, vorzugsweise an deren Unterseite. Hierdurch stößt sich der Antriebshilfsrahmen 12 an den horizontalen Führungsstangen 5 ab.

Aus dem Vorgesagten ergibt sich, dass der erfindungsgemäße Hilfsantrieb 17 auch gut zur Nachrüstung bestehender, bisher rein manuell betätigter Tuchlader geeignet ist, insbesondere dann, wenn er akkubetrieben ist.

Denn es ist zur Nachrüstung nichts anderes erforderlich als der nachträgliche Anbau der Zahnstangen 23 an die horizontalen Führungsstangen 5 und das passgenau zu den Zahnstangen 23 ausgerichtete Anbauen des Antriebshilfsrahmen 12 (mit all den von ihm getragenen Komponenten) an die Gesamtheit der Tuchschieber 6. Aufgrund dessen wird auch entsprechender Verwendungsschutz für einen nachrüstbaren Antriebshilfsrahmen 12 beantragt, der so gestaltet ist, dass er nur mittelbar über die Tuchschieber 6 mit dem Grundgestell 2 verbunden ist und ansonsten nur über mindestens ein Rad bzw. Ritzel 22 mit dem Grundgestell 2 kraftschlüssig interagiert. Der Antriebshilfsrahmen 12 kann optional so ausgestattet sein, wie zuvor beschrieben.

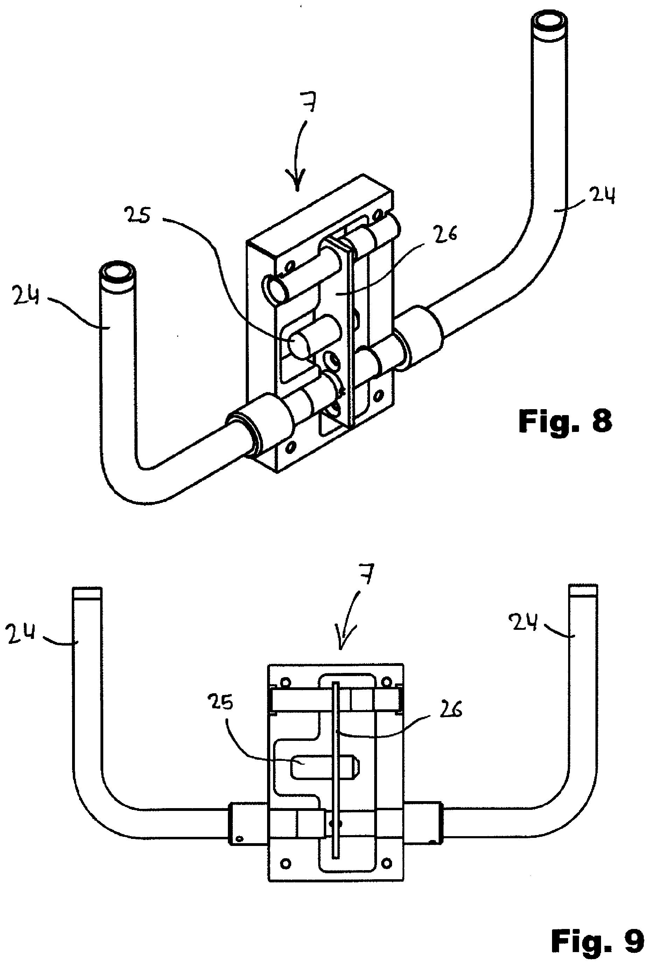

Die Figuren 8 und 9 zeigen den zum Verschieben vorgesehenen Griff 7.

Der Griff 7 umfasst eine Griffstange 24, die vorzugsweise als C-förmiger Bügel gestaltet ist. Idealerweise zeigt dessen offene Seite nach oben. Der Griff 7 ist entlang horizontaler Richtung gesehen vorzugsweise mittig an dem Antriebshilfsrahmen 12 positioniert. Er bildet von dort aus zwei auch nach links und rechts in horizontaler Richtung abstehende Griffstangen bzw. Griffstangenabschnitte 24. Die Enden dieser Griffstangenabschnitte besitzen einen Abstand von weniger oder gleich 1/4 der Breite des Tuchladers von den ihnen unmittelbar gegenüberliegenden horizontalen Führungsstangen 5. Auf diese Art und Weise kann der Bediener seitlich neben dem Tuchlader 1 stehen und zwischen zwei horizontalen Führungsstangen 5 durchgreifen. Er erreicht dabei bequem den in der Nähe dieser beiden Führungsstangen liegenden Griffabschnitt und kann den Griff 7 mithilfe des Hilfsantriebs gut hin- und her bewegen, vgl. auch Fig. 7.

Gut anhand der Figur 7 zu erkennen ist, dass der Griff nicht unmittelbar an dem Tuchschieber bzw. dem Antriebshilfsrahmen 12 befestigt ist, sondern über einen Torsionsabschnitt 25. Dieser Torsionsabschnitt 25 enthält vorzugsweise den hier nicht gezeigten Sensor. Der Sensor generiert im Regelfall ein Signal, das davon abhängt, wie stark der Torsionsabschnitt 25 unter dem Einfluss der am Griff 7 aufgebrachten Kräfte tordiert wird. Vorzugsweise kann der Sensor dabei auch erkennen, in welche Richtung tordiert wird und entsprechende Signale liefern.

Im Idealfall ist der Griffabschnitt der Griffstange 24 nicht unmittelbar mit dem Torsionsabschnitt 25 verbunden. Vielmehr kommt ein zwischenliegender, separater Hebelarm 26 zum Einsatz. Über diesen Hebelarm 26 lässt sich konstruktionsseitig einstellen, dass die im Rahmen des Verschiebens der Tuchschieber vom Bediener am Griff 7 aufgebrachten Kräfte auch wirklich eine so ausgeprägte Torsion am Torsionsabschnitt 25 bewirken, dass die am Torsionsabschnitt 25 auftretenden Verformungen korrekt im Arbeitsbereich des Sensors liegen und daher diesen mit der notwendigen Genauigkeit ansprechen lassen.

Der Vollständigkeit halber sei noch gesagt, dass nicht zwingend ein Torsionsabschnitt 25 bzw. ein entsprechender Torsionssensor zum Einsatz kommen muss. Theoretisch wäre es auch denkbar, einen Biegesensor zum Einsatz zu bringen und diesen zum Beispiel am Hebelarm 26 anzubringen, um dessen Verformung unter dem Einfluss der bei der Bedienung auftretenden Kräfte zu messen bzw. auszuwerten.

### ZWEITES AUSFÜHRUNGSBEISPIEL

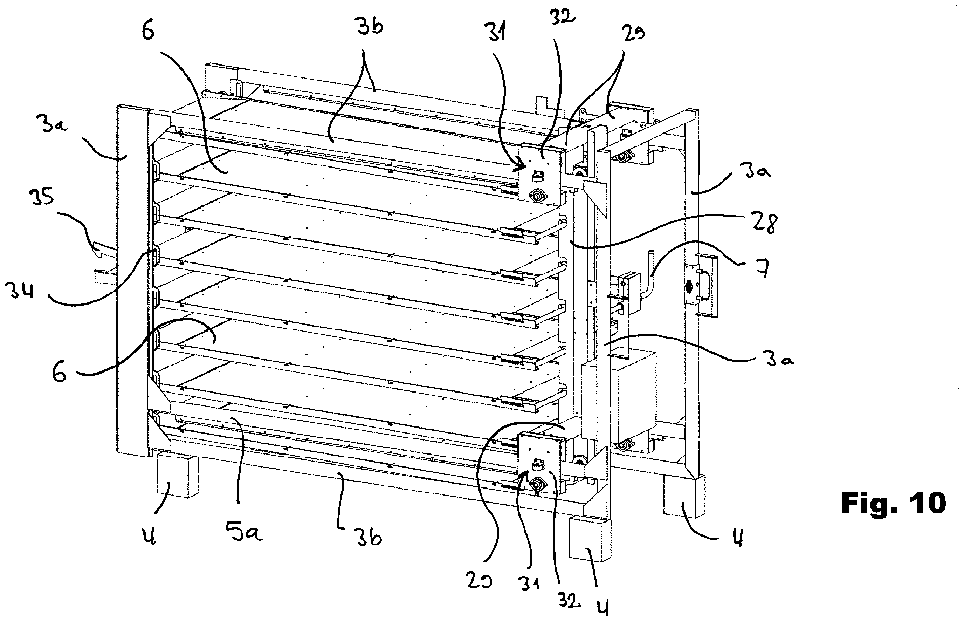

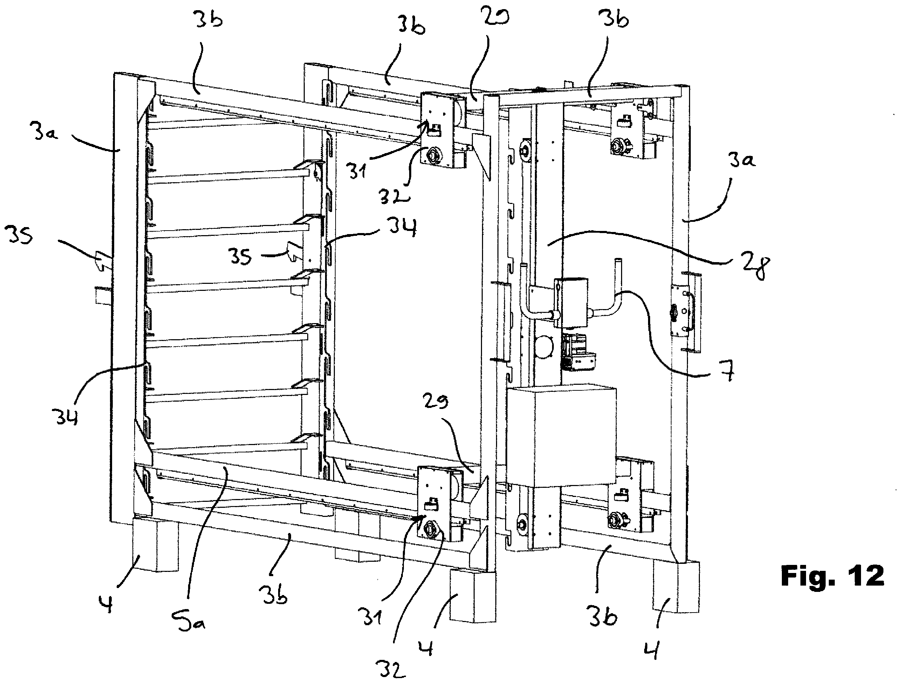

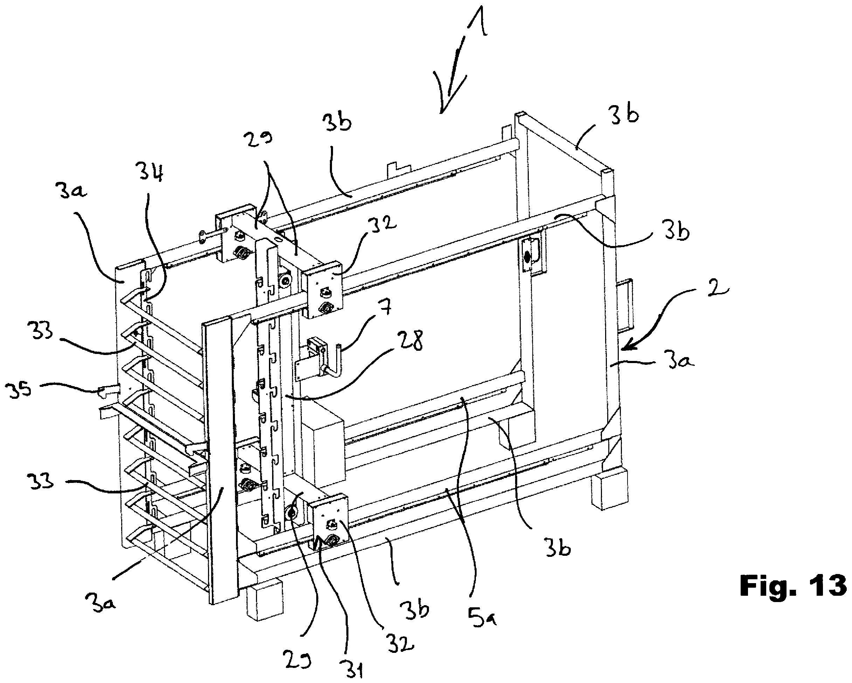

Die Fig. 10, 11, 12 und 13 zeigen ein zweites Ausführungsbeispiel der Erfindung.

Bis auf die nachfolgend explizit erläuterten Unterschiede entspricht das zweite Ausführungsbeispiel des erfindungsgemäßen Tuchladers dem bis hierher beschriebenen ersten Ausführungsbeispiel des erfindungsgemäßen Tuchladers. Das zuvor Gesagte gilt daher für dieses zweite Ausführungsbeispiel entsprechend, sofern die nachfolgend beschriebenen Unterschiede nicht zwingend etwas anderes erfordern.

Gut zu erkennen ist in der Fig. 10 das Grundgestell 2, das vorteilhafterweise wieder als Quader ausgebildet ist und bevorzugt mit den Längen- und Breitenverhältnissen ausgestattet ist, die schon für das erste Ausführungsbeispiel beschrieben worden sind.

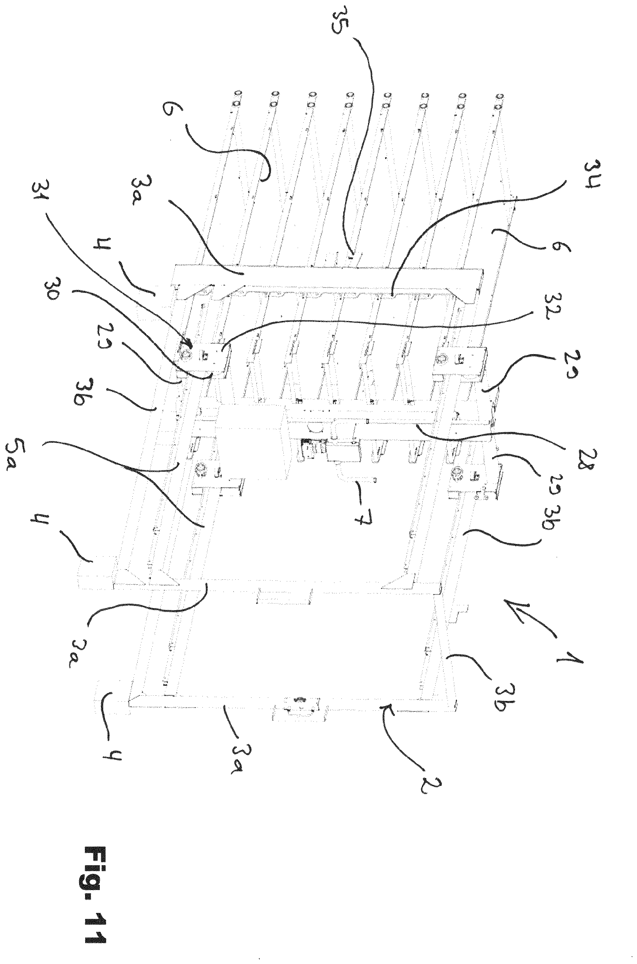

Gut an Hand der Fig. 11 zu erkennen ist, dass das Grundgestell 2 hier wieder einen Etagenwagen bildet, an dem eine Mehrzahl von Tuchschiebern 6 übereinander angeordnet ist. Auch hier wird das Grundgestell 2 vorzugsweise aus Stangen bzw. Rohren 3 gebildet. Es bildet dann einen im Wesentlichen quaderförmigen Rohrrahmen aus.

Bevorzugt kommen Vertikalstangen oder Vertikalrohre 3a zum Einsatz, die einen größeren Querschnitt bzw. Durchmesser haben als die Horizontalstangen oder Horizontalrohre 3b.

Auf der Stirnseite des Etagenwagens ist unten bevorzugt keine/kein quer bzw. rechtwinklig zur Verschieberichtung verlaufende(s) Horizontalstange bzw. Horizontalrohr angebracht. Dadurch wird eine gefährliche Stolperstelle für den Bediener vermieden, der die Tuchschieber durch Schieben an der Griffstange 24, die ihrerseits den Hilfsantrieb aktiviert, in Richtung Ofen schiebt und dabei tendenziell der Griffstange hinterhergeht bzw. folgt.

Zum gleichen Zweck ist auf derselben Stirnseite des Etagenwagens ist oben bevorzugt eine quer/rechtwinklig zur Verschieberichtung verlaufende(s) Horizontalstange bzw. Horizontalrohr angebracht, die höher gesetzt ist und dadurch oberhalb der oberen Horizontalrohre oder Horizontalstangen 3 liegt, die parallel zur Verschieberichtung verlaufen. Dadurch wird eine Art Tür oder Portal gebildet, das hoch genug ist, um sicherzustellen, dass sich der der Griffstange 24 in den Etagenwagen hinein folgende Bediener nicht den Kopf anschlägt.

Der Unterschied zu dem ersten Ausführungsbeispiel besteht hier darin, dass statt der horizontalen Führungsstangen 5 für jeden Tuchschieber 6 vorzugsweise nur insgesamt vier horizontale Führungsstangen 5a vorgesehen sind. Zumindest zwei oder alle vier der Führungsstangen 5a sind bevorzugt nicht als separate Bauteile ausgeführt, sondern integraler Bestandteil einer Horizontalstange oder eine Horizontalrohrs 3b.

Um besonders stabile Konstruktionen zu erreichen, sind die unteren Führungsstangen 5a idealerweise als separate Bauteile ausgeführt, die zusätzlich zu und separat von den unteren Horizontalstangen bzw. Horizontalrohren 3b ausgeführt sind, oberhalb derselben.

An diesen horizontalen Führungsstangen 5a ist horizontal beweglich geführt ein Antriebshilfsrahmen 12 gelagert. Der Antriebshilfsrahmen 12 besteht vorzugsweise aus einer einzelnen, ein- oder mehrteilig ausgebildeten, vertikal verlaufenden Säule 28. Diese Säule trägt - vorzugsweise nur zwei - sich horizontal erstreckende Radlagerstangen 29. Die Radlagerstangen stehen beidseitig von der Säule ab. Die Säule ist im Wesentlichen oder vorzugsweise vollständig mittig an den Radlagerstangen 29 befestigt. Der Antriebshilfsrahmen 12 stellt sich dadurch bevorzugt als ein H-förmiges Gebilde aus der vertikal verlaufenden Säule 28 und den beiden Radlagerstangen 29 dar. Der Antriebshilfsrahmen 12 erstreckt sich also im Wesentlichen in vertikaler Richtung. Seine maximale Erstreckung in vertikaler Richtung ist bevorzugt um mindestens den Faktor 4, besser um mindestens den Faktor 5 größer als seine maximale horizontale Erstreckung parallel zu seiner Verfahrrichtung.

Wie schon oben beschrieben, trägt der Antriebshilfsrahmen 12 den Hilfsantrieb 17, der, wie ebenfalls oben beschrieben, bevorzugt aus Motor 14, Akku 21, Elektronik 18 sowie der Antriebsimpulse generierenden Griffstange 24 und meist auch einem Getriebe 15, 20 besteht.

Zumindest eine oder besser zumindest ein Paar der Führungsstangen 5a ist mit einem Formschlussprofil, bevorzugt in Gestalt einer Zahnstange 23 ausgestattet, in die entsprechende Formschlussrollen, bevorzugt Ritzel eingreifen, um den Antriebshilfsrahmen 12 motorgetrieben schlupffrei hin und her fahren zu können und dabei meist nicht nur antreiben sondern bevorzugt auch abbremsen zu können.

Am äußersten Ende jeder Radlagerstange ist mindestens eine Führungsrolle angebracht, vorzugsweise sogar ein Führungsrollensatz aus mindestens zwei Führungsrollen, von denen eine das bereits angesprochene Ritzel sein kann. Die Führungsrollen laufen auf den horizontalen Führungsstangen 5a. Der Führungsrollensatz gewährleistet, dass die Führungsstangen 5a nicht nur Druckkräfte vom Antriebshilfsrahmen 12 aufnehmen können, sondern auch Zugkräfte aufbringen können und/oder, dass der Antriebshilfsrahmen 12 gegenüber den Führungsstangen 5a zumindest nicht ausgehoben werden und nicht verkippen kann. Dadurch kann ein etwaiges Drehmoment, das an dem Antriebshilfsrahmen 12 wirkt, von den Führungsrollen über die Führungsstangen 5a aufgefangen werden. Denn jeder Führungsrollensatz verfügt über mindestens eine Führungsrolle 30, die von oben auf der Führungsstangen 5a aufliegt und mindestens eine andere Rolle 30, die von unten her gegen die Führungsstange 5a anliegt.

Jeder Führungsrollensatz kann mithilfe eines Führungsrollenkastens 31 am Ende der Radlagerstange 29 gehalten werden. Ein solcher Führungsrollenkasten 31 kann aus zwei parallel angeordneten Platten 32 bestehen, die zwischen sich jeweils mit einer Achse, die zwischen beiden Platten 32 verläuft, die Führungsrollen 30 aufnehmen.

Die Säule besitzt Kupplungen 30. An jede Kupplung kann jeweils jeweils ein Tuchschieber 6 angekuppelt werden, vorzugsweise dadurch, dass er in die jeweilige Kupplung 30 eingehängt wird, die zu diesem Zweck vorzugsweise die Gestalt einer an ihrem oberen Ende offenen Bajonett-Öffnung haben kann. Wie man gut an den Figuren erkennt werden die Kupplungen 30 idealerweise dadurch verwirklicht, dass ein U-Profil vorgesehen wird, das vertikal orientiert an der Säule 28 des Antriebshilfsrahmens 12 montiert wird und in seinen beiden U-Schenkeln jeweils die besagte nach oben offene Bajonett-Öffnungen aufweist, die jeweils paarweise eine Kupplung 30 bilden.

An der im bestimmungsgemäßen Gebrauch ofenseitigen Stirnseite kann für jeden Tuchschieber 6 eine horizontal verlaufende Querstütze 33 vorgesehen sein, die ihn von unten her direkt oder über daran befestige Gleitlagerabschnitte unterstützt. Die Querstütze könnte, bei direktem Kontakt, einen drehbaren Mantel aufweisen, über den der jeweilige Tuchschieber abrollt.

Diese Ausgestaltungen haben gegenüber dem ersten Ausführungsbeispiel den Vorteil, dass darauf verzichtet werden kann, jeden einzelnen Tuchschieber mittels eigener, an ihm befestigter Rollen an dem Etagenwagen abrollen zu lassen.

An der im bestimmungsgemäßen Gebrauch ofenseitigen Stirnseite kann vertikal auf- und abbewegbar eine Formschlussriegelleiste 34 vorgesehen sein. In ihrer abgesenkten Position verhindert sie, dass ein einzelner Tuchschieber aus dem Etagenwagen ausgehoben werden kann, z. B. dadurch dass sie für jeden Tuchschieber 6 eine nach unten offene, u-förmige Klaue besitzt, die formschlüssig über die seitliche Bordwand eines Tuchschiebers greift. In ihrer angehobenen, gelüfteten Position gibt die Formschlussriegelleiste 34 die Tuchschieber 6 frei, so dass diese zu Reinigungszwecken ausgehoben und entfernt werden können.

Eine besonders wichtige Weiterbildung, die für beide Ausführungsbeispiele gilt, besteht in der Ofenverriegelungseinrichtung 35. Diese steht über die im bestimmungsgemäßen Gebrauch ofenseitige Stirnseite hinaus, idealerweise an beiden vertikalen Ecken der Stirnseite. Sie ist bevorzugt vom Bereich der Griffstange 24 aus fernsteuerbar, elektrisch, oder besonders simpel und zuverlässig durch einen Bowdenzug.

Besonders sinnvoll ist es, die Ofenverriegelungseinrichtung als einen um eine horizontale Achse schwenkbaren Hakenriegel auszuführen.

Im Idealfall weist der Hakenriegel auf seiner ofennahen Seite eine Einführschräge auf, die ihn bei Auftreffen auf den Rand des entsprechenden Riegellochs im Ofen anhebt, so dass er leicht in das Riegelloch eingeführt werden kann. Dort senkt er sich idealerweise unter dem Einfluss seines Eigengewichts ab und verriegelt so.

Dadurch wird sichergestellt, dass beim motorischen Verfahren der Tuchschieber sich wirklich nur die Tuchschieber in den Ofen hinein bewegen und nicht etwa, falls die Tuchschieber verzögert bleiben, wenn sie auf das Backgut treffen, das sie aufnehmen sollen, stattdessen unversehens der Etagenwagen vom Ofen "abgedrückt" wird, auch dann nicht, wenn seine Radbremse eventuell nicht oder nicht richtig angezogen wurde.

Die spezielle Ausgestaltung des Hilfsantriebsrahmens hat bei diesem Ausführungsbeispiel den Vorteil, dass der Hilfsantriebsrahmen als gegenüber dem Grundgestell mit einfachen Mitteln rollen- bzw. kugelgelagerte Stütze / Lastaufnahme für die selbst im Bereich des Hilfsantriebsrahmens nicht direkt am Grundgestell gelagerten Tuchschieber 6 dienen kann. In dieser Eigenschaft fängt der Hilfsantriebsrahmen einen wesentlichen Teil des Gewichts der Tuchschieber 6 und ggf. ihrer Ladung auf und leitet sie in das Grundgestell ab - bei völlig in das Grundgestell eingefahrenen Tuchschiebern bevorzugt etwa mindestens 40% bis 60%.

Die Tuchschieber selbst brauchen daher gegenüber dem Grundgestell keine eigene Rollen- oder Kugellagerung mehr zu besitzen, was erheblichen Bauaufwand spart und vor allem die Reinigung vereinfacht.

Es kann reichen, die Tuchschieber 6 z. B. an der dem Hilfsrahmen 12 maximal abgewandten Stirnseite des Grundgestells über lokale Gleitlager abzustützen. Zu diesem Zweck kann dort, und bevorzugt nur dort, die in den Fig. 10 bis 13 zu erkennende leiterartige Querverstrebung vorgesehen sein. Man sieht recht gut die bevorzugt von dieser leiterartigen Querverstrebung schräg nach oben innen ragenden Gleitlagerflächen.

### BEZUGSZEICHENLISTE

- 1: Tuchlader
- 2: Grundgestell
- 3: Stange bzw. Rohr des Grundgestells als solchem
- 3a: Vertikalstange oder Vertikalrohr
- 3b: Horizontalstangen oder Horizontalrohr
- 4: Rad
- 5: horizontale Führungsstange
- 5a: horizontale Führungsstangen
- 6: Tuchschieber
- 7: Griff
- 8: Tuchschieberrahmen
- 9: Tuchumlenkrollen
- 10: Spitze des Tuchschiebers
- 11: Laufrolle des Tuchschiebers
- 12: Antriebshilfsrahmen
- 13: Zwischenträger
- 14: Motor
- 15: Untersetzungsgetriebe
- 16: Antriebswelle
- 17: Hilfsantrieb
- 18: elektronische Antriebssteuerung
- 19: Zentralwelle
- 20: Winkelgetriebe
- 21: Akku
- 22: Ritzel
- 23: Zahnstange
- 24: Griffstange
- 25: Torsionsabschnitt
- 26: zusätzlicher Hebelarm
- 27: Verteilergetriebe

- 28: Säule des Antriebshilfsrahmen 12
- 29: Radlagerstange
- 30: Führungsrolle
- 31: Führungsrollen Kasten
- 32: Platte

- 33: horizontal verlaufende Querstütze für einen Tuchschieber
- 34: Formschlussriegelleiste
- 35: Ofenverriegelungseinrichtung

- S: Sicherheitslänge
- T: Tuch (Förderband) des Tuchschiebers

## Patentansprüche

1. Tuchlader (1) für das Absetzen und Wiederaufnehmen von Teiglingen auf der Ladefläche eines Backofens, eines Gärschranks oder eines Ladewagens, mit einem vorzugsweise mobilen Grundgestell (2), das ein freies Verschieben des Tuchladers (1) zwischen verschiedenen Einsatzorten ermöglicht, mit mindestens einem Tuchschieber (6), der relativ zum Grundgestell (2) verschiebbar an diesem gelagert ist und zwischen zwei Extrempositionen verschoben werden kann, von denen eine die maximal eingefahrene Transportposition ist, in der sich der Tuchschieber (6) vollständig oder im Wesentlichen in dem Grundgestell (2) befindet, und die andere die maximal ausgefahrene Ladeposition ist, in der der Tuchschieber (6) die Ladefläche des Backofens oder dergleichen übergreift, um dort mehrere Teiglinge abzusetzen und/oder abzuholen, **dadurch gekennzeichnet, dass** der Tuchschieber (6) einen elektronischen Hilfsantrieb (17) besitzt, der durch das manuelle Verschieben des Tuchschiebers (6) aktiviert wird und dazu beiträgt, den Tuchschieber (6) in die durch die händische Kraft vorgegebene Richtung zu bewegen.

2. Tuchlader (1) nach Anspruch 1, **dadurch gekennzeichnet, dass** der Tuchlader (1) einen Sensor aufweist, der die an einem Griff (7) beim händischen Verschieben des Tuchschiebers (6) aufgebrachte Kraft erkennt und dessen kraftabhängiges Signal den Hilfsantrieb (17) in Gang setzt und/oder dadurch dass der Tuchlader (1) eine elektronische Antriebssteuerung (18) besitzt, die den Hilfsantrieb (17), über das erstmalige Ein- und Wiederausschalten hinaus, in Abhängigkeit von dem Sensorsignal beeinflusst.

3. Tuchlader (1) nach einem der vorhergehenden Ansprüche, **dadurch gekennzeichnet, dass** der Tuchlader (1) eine elektronische Antriebssteuerung (18) besitzt, die den Hilfsantrieb (17) bremsend ansteuert, wenn die an dem Griff (7) beim händischen Verschieben des Tuchschiebers (6) aufgebrachte Kraft vom Sensor als Bremskraft erkannt wird.

4. Tuchlader (1) nach einem der vorhergehenden Ansprüche, **dadurch gekennzeichnet, dass** die Elektronik ein vorzugsweise einstellbares Zeitverzögerungsglied aufweist, welches bewirkt, dass die elektronische Antriebssteuerung (18) den Hilfsantrieb (17) nur mit Verzögerung und dabei idealerweise an- und/oder abschwellend beeinflusst.

5. Tuchlader (1) nach einem der vorhergehenden Ansprüche, **dadurch gekennzeichnet, dass** der Tuchlader (1) einseitig und bevorzugt beidseitig mindestens einen Endlagengeber aufweist, der von dem Tuchschieber (6) in seiner Endlage oder im Nahbereich seiner Endlage betätigt wird und dessen Signal den Hilfsantrieb (17) deaktiviert.

6. Tuchlader (1) nach einem der vorhergehenden Ansprüche, **dadurch gekennzeichnet, dass** der Tuchlader (1) einen Akku (21) aufweist, der den Hilfsantrieb (17) und vorzugsweise auch die elektronische Antriebssteuerung (18) speist, wobei letztere vorzugsweise eine Zusatzstromquelle besitzt, die sie im Falle der Entleerung des Akkus (21) vor Datenverlust schützt.

7. Tuchlader (1) nach einem der vorhergehenden Ansprüche, **dadurch gekennzeichnet, dass** der Hilfsantrieb (17) mit mindestens einem Rad (4) des mobilen Grundgestells (2) gekuppelt werden kann, um den Tuchlader (1) als Ganzen zu bewegen.

8. Tuchlader (1) nach einem der vorhergehenden Ansprüche, **dadurch gekennzeichnet, dass** der Tuchlader (1) mehrere Tuchschieber (6) aufweist, die gemeinsam von Hand und mit Unterstützung des Hilfsantriebs (17) relativ zum Grundgestell (2) verschoben werden können.

9. Tuchlader (1) nach einem der vorhergehenden Ansprüche, **dadurch gekennzeichnet, dass** das Grundgestell (2) ein Etagenwagen ist, in dem mehrere Tuchschieber (6) übereinander angeordnet sind.

10. Tuchlader (1) nach Anspruch 9, **dadurch gekennzeichnet, dass** der Tuchlader (1) einen sich im Wesentlichen vertikal erstreckenden Antriebshilfsrahmen (12) aufweist, der sich innerhalb eines quaderförmigen Rohrrahmens des Grundgestells (2) befindet und die Tuchschieber (6) auf ihrer der Be- und Entladestirnseite abgewandten Stirnseite miteinander verbindet, wobei der Antriebshilfsrahmen (12) den Hilfsantrieb (17), die elektronische Antriebssteuerung (18), den Griff (7) zum händischen Verschieben der Tuchschieber (6) und vorzugsweise auch einen Akku (21) trägt, wobei der Hilfsantrieb (17) auf mindestens ein Rad oder Ritzel (22) wirkt, das gegenüber dem Etagenwagen abrollt, so dass sich der Antriebshilfsrahmen (12) beim Bewegen der Tuchschieber (6) zusammen mit den Tuchschiebern (6) relativ zum Etagenwagen bewegt.

11. Tuchlader (1) nach Anspruch 10, **dadurch gekennzeichnet, dass** an dem Antriebshilfsrahmen (12) mindestens eine, idealerweise zwei Antriebswellen (16) gelagert sind, mit jeweils zwei freien Enden, die jeweils, vorzugsweise fliegend gelagert, ein Rad oder Ritzel (22) tragen.

12. Tuchlader (1) nach Anspruch 12, **dadurch gekennzeichnet, dass** der Antriebshilfsrahmen (12) mindestens ein Verteilergetriebe (27) trägt, über das die beiden Antriebswellen (16) mit dem Motor (14) verbunden sind.

13. Tuchlader (1) nach einem der Ansprüche 10 bis 12, **dadurch gekennzeichnet, dass** das mindestens eine Rad oder Ritzel (22) auf der Unterseite einer horizontalen Führungsstange (5) abrollt, die auf ihrer Oberseite oder an ihrer inneren Seitenflanke eine Führung für einen Tuchschieber (6) bildet.

14. Tuchlader nach einem der vorhergehenden Ansprüche, **dadurch gekennzeichnet, dass** der Antriebshilfsrahmen (12) ein - sich vorzugsweise überwiegend in vertikaler Richtung erstreckender - Wagen ist, der an mindestens vier Führungsschienen mittels Führungsrollen (30) gegenüber dem Grundgestell (2) verfahrbar gelagert ist, wobei der Antriebshilfsrahmen (12) bei völlig in das Grundgestell (2) eingefahrenen Tuchschiebern (6) einen wesentlichen Teil der Gewichtskräfte eines jeden Tuchschiebers und ggf. seiner Ladung aufnimmt und in das Grundgestell ableitet, vorzugsweise 40% bis 60% und wobei die Tuchschieber abgesehen von ihrer Lagerung am Grundgestell über den Antriebshilfsrahmen (12), nur mittels Gleitlagern an dem Grundgestell beweglich gelagert sind.

## Claims

1. A cloth loading unit (1) for setting down and picking up again pieces of dough on/from the loading surface of an oven, a proving cabinet or a loading trolley, comprising a preferably mobile base rack (2) enabling an unrestricted displacement of the cloth loading unit (1) between different points of use, with at least one cloth sliding unit (6), which is mounted on the base rack (2) in a displaceable manner relative thereto and which can be displaced between two extreme positions, one of which is the maximally retracted transport position, in which the cloth sliding unit (6) is located fully or substantially within the base rack (2), and the other one of which is the maximally extended loading position, in which the cloth sliding unit (6) reaches across the loading surface of the oven or the like in order to set down several pieces of dough there and/or retrieve them, **characterized in that** the cloth sliding unit (6) has an electronic auxiliary drive (17), which is activated by manually displacing the cloth sliding unit (6) and contributes to moving the cloth sliding unit (6) in the direction set by the manual force.

2. The cloth loading unit (1) according to claim 1, **characterized in that** the cloth loading unit (1) comprises a sensor, which recognizes the force applied to a handle (7) when manually displacing the cloth sliding unit (6) and whose force-dependent signal starts up the auxiliary drive (17), and/or **in that** the cloth loading unit (1) has an electronic drive control (18) which influences the auxiliary drive (17) in accordance with the sensor signal, beyond the first acti-vation and deactivation.

3. The cloth loading unit (1) according to any one of the preceding claims, **characterized in that** the cloth loading unit (1) has an electronic drive control (18) which controls the auxiliary drive (17) in a decelerating manner if the force applied to the handle (7) when manually displacing the cloth sliding unit (6) is recognized by the sensor as a decelerating force.

4. The cloth loading unit (1) according to any one of the preceding claims, **characterized in that** the electronic system includes a preferably adjustable time delay component which causes the electronic drive control (18) to influence the auxiliary drive (17) only with a delay and, in the process, ideally in an increasing and/or decreasing manner.

5. The cloth loading unit (1) **characterized in that** the cloth loading unit (1) has, on one side and preferably on both sides, at least one end position sensor, which is triggered by the cloth sliding unit (6) in its end position or in the vicinity of its end position, and whose signal deactivates the auxiliary drive (17).

6. The cloth loading unit (1) according to any one of the preceding claims, **characterized in that** the cloth loading unit (1) has a rechargeable battery (21) which powers the auxiliary drive (17) and preferably also the electronic drive control (18), wherein the latter preferably has an additional power source which protects it against loss of data in the event of the rechargeable battery (21) becoming discharged.

7. The cloth loading unit (1) according to any one of the preceding claims, **characterized in that** the auxiliary drive (17) can be coupled to at least one wheel (4) of the mobile base rack (2) in order to move the cloth loading unit (1) as a whole.

8. The cloth loading unit (1) according to any one of the preceding claims, **characterized in that** the cloth loading unit (1) comprises several cloth sliding units (6) which can be displaced together, relative to the base rack (2), by hand and with assistance from the auxiliary drive (17).

9. The cloth loading unit (1) according to any one of the preceding claims, **characterized in that** the base rack (2) is a shelf trolley in which several cloth sliding units (6) are disposed one above the other.

10. The cloth loading unit (1) according to claim 9, **characterized in that** the cloth loading unit (1) has a substantially vertically extending drive auxiliary frame (12), which is located within a cuboid tube frame of the base rack (2) and interconnects the cloth sliding units (6) on the end face thereof facing away from the loading and unloading side, wherein the drive auxiliary frame (12) supports the auxiliary drive (17), the electronic drive control (18), the handle (7) for manually displacing the cloth sliding units (6) and preferably also a rechargeable battery (21), wherein the auxiliary drive (17) acts on at least one wheel or sprocket (22) that rolls relative to the shelf trolley, so that the drive auxiliary frame (12) moves relative to the shelf trolley together with the cloth sliding units (6) when the cloth sliding units (6) are moved.

11. The cloth loading unit (1) according to claim 10, **characterized in that** at least one, ideally two, drive shafts (16) with, in each case, two free ends that each support a wheel or sprocket (22), preferably in a cantilevered manner, are mounted on the drive auxiliary frame (12).

12. The cloth loading unit (1) according to claim 12, **characterized in that** the drive auxiliary frame (12) supports at least one transfer case (27) via which the two drive shafts (16) are connected to the motor (14).

13. The cloth loading unit (1) according to any one of the claims 10 to 12, **characterized in that** the at least one wheel or sprocket (22) rolls on the underside of a horizontal guide rail (5), which forms on its top side or its inner lateral side a guide for a cloth sliding unit (6).

14. The cloth loading unit according to any one of the preceding claims, **characterized in that** the drive auxiliary frame (12) is a trolley which extends, preferably predominantly, in the vertical direction and which is mounted, in a moveable manner relative to the base rack (2), on at least four guide rails by means of guide rollers (30), wherein the drive auxiliary frame (12), if the cloth sliding units (6) are completely retracted into the base rack (2), absorbs a substantial part of the weight of each cloth sliding unit and, if applicable, its load, and transmits it into the base rack, preferably 40% to 60%, and wherein the cloth sliding units, apart from their being mounted on the base rack by means of the drive auxiliary frame (12), are movably mounted on the base rack only by means of slide bearings.

## Revendications

1. Chargeur en toile (1) pour déposer et ramasser des pâtons sur la surface de chargement d'un four de cuisson, d'une armoire de fermentation ou d'un chariot de chargement, comportant un bâti de base (2) de préférence mobile qui permet de déplacer librement le chargeur en voile (1) entre différents lieux d'utilisation, comportant au moins un poussoir en toile (6) qui est monté sur le bâti de base (2) de manière à pouvoir être déplacé par rapport à ce dernier et qui peut être déplacé entre deux positions extrêmes, dont l'une est la position de transport rétractée au maximum dans laquelle le poussoir en toile (6) se trouve complètement ou sensiblement dans le bâti de base (2), et l'autre est la position de chargement déployée au maximum dans laquelle le poussoir en toile (6) recouvre la zone de chargement du four de cuisson ou similaire afin d'y déposer et/ou d'y prélever plusieurs pâtons,
**caractérisé en ce que**
le poussoir en toile (6) présente un entraînement auxiliaire électronique (17) qui est activé par le déplacement manuel du poussoir en toile (6) et qui contribue à déplacer le poussoir en toile (6) dans la direction prédéterminée par la force manuelle.

2. Chargeur en toile (1) selon la revendication 1,
**caractérisé en ce que**
le chargeur en toile (1) comprend un capteur qui détecte la force exercée sur une poignée (7) lors du déplacement manuel du poussoir en toile (6) et dont le signal dépendant de la force met en marche l'entraînement auxiliaire (17) et/ou **en ce que**
le chargeur en toile (1) possède une commande d'entraînement électronique (18) qui influence l'entraînement auxiliaire (17) au-delà de la première mise en service et mise hors service, en fonction du signal du capteur.

3. Chargeur en toile (1) selon l'une des revendications précédentes,
**caractérisé en ce que**
le chargeur en toile (1) possède une commande d'entraînement électronique (18) qui pilote en freinage l'entraînement auxiliaire (17) lorsque la force exercée sur la poignée (7) lors du déplacement manuel du poussoir en toile (6) est détectée comme force de freinage par le capteur.

4. Chargeur en toile (1) selon l'une des revendications précédentes,
**caractérisé en ce que**
l'unité électronique comprend un organe de retardement de préférence réglable qui fait que la commande d'entraînement électronique (18) influence l'entraînement auxiliaire (17) uniquement avec un retard et idéalement de façon croissante et/ou décroissante.

5. Chargeur en toile (1) selon l'une des revendications précédentes,
**caractérisé en ce que**
le chargeur en toile (1) comprend sur un côté et de préférence sur les deux côtés au moins un capteur de fin de course qui est actionné par le poussoir en toile (6) dans sa position de fin de course ou dans la zone proche de sa position de fin de course et dont le signal désactive l'entraînement auxiliaire (17).

6. Chargeur en toile (1) selon l'une des revendications précédentes,
**caractérisé en ce que**
le chargeur en toile (1) comprend un accumulateur (21) qui alimente l'entraînement auxiliaire (17) et de préférence également la commande d'entraînement électronique (18), cette dernière possédant de préférence une source de courant supplémentaire qui, en cas d'épuisement de l'accumulateur (21), protège vis-à-vis d'une perte de données.

7. Chargeur en toile (1) selon l'une des revendications précédentes,
**caractérisé en ce que**
l'entraînement auxiliaire (17) peut être couplé à au moins une roue (4) du bâti de base (2) mobile pour déplacer le chargeur en toile (1) dans son ensemble.

8. Chargeur en toile (1) selon l'une des revendications précédentes,
**caractérisé en ce que**
le chargeur en toile (1) comprend plusieurs poussoirs en toile (6) qui peuvent être déplacés conjointement à la main et sous l'assistance de l'entraînement auxiliaire (17) par rapport au bâti de base (2).

9. Chargeur en toile (1) selon l'une des revendications précédentes,
**caractérisé en ce que**
le bâti de base (2) est un chariot à étages dans lequel plusieurs poussoirs en toile (6) sont disposés les uns au-dessus des autres.

10. Chargeur en toile (1) selon la revendication 9,
**caractérisé en ce que**
le chargeur en toile (1) comprend un cadre auxiliaire d'entraînement (12) qui s'étend sensiblement verticalement et qui se trouve à l'intérieur d'un cadre tubulaire en forme de parallélépipède du bâti de base (2) et qui relie les poussoirs en toile (6) les uns aux autres sur leur face frontale détournée de la face frontale de chargement et de déchargement, le cadre auxiliaire d'entraînement (12) portant l'entraînement auxiliaire (17), la commande d'entraînement électronique (18), la poignée (7) pour le déplacement manuel des poussoirs en toile (6) et de préférence également un accumulateur (21), l'entraînement auxiliaire (17) agissant sur au moins une roue ou un pignon (22) qui déroule par rapport au chariot à étages, de sorte que le cadre auxiliaire d'entraînement (12) se déplace conjointement avec les poussoirs en toile (6) par rapport au chariot à étages lors du déplacement des poussoirs en toile (6).

11. Chargeur en toile (1) selon la revendication 10,
**caractérisé en ce que**
au moins un, idéalement deux arbres d'entraînement (16) sont montés sur le cadre auxiliaire d'entraînement (12), comportant chacun deux extrémités libres qui portent chacune une roue ou un pignon (22) de préférence à montage flottant.

12. Chargeur en toile (1) selon la revendication 11,
**caractérisé en ce que**
le cadre auxiliaire d'entraînement (12) porte au moins un mécanisme de répartition (27) par lequel les deux arbres d'entraînement (16) sont reliés au moteur (14).

13. Chargeur en toile (1) selon l'une des revendications 10 à 12,
**caractérisé en ce que**
ladite au moins une roue ou ledit au moins un pignon (22) déroule sur la face inférieure d'une tige de guidage horizontale (5) qui forme un guidage pour un poussoir en toile (6) sur sa face supérieure ou sur son flanc latéral intérieur.

14. Chargeur en toile selon l'une des revendications précédentes,
**caractérisé en ce que**
le cadre auxiliaire d'entraînement (12) est un chariot qui s'étend de préférence majoritairement en direction verticale et qui est monté de façon mobile par rapport au bâti de base (2) sur au moins quatre rails de guidage à l'aide de galets de guidage (30),
le cadre auxiliaire d'entraînement (12) encaisse une partie essentielle, de préférence 40 % à 60 %, des forces pondérales de chacun des poussoirs en toile et le cas échéant de sa charge pour les transmettre dans le bâti de base lorsque les poussoirs en toile (6) sont rétractés complètement dans le bâti de base (2), et
les poussoirs en toile sont montés de façon mobile uniquement à l'aide de paliers coulissants sur le bâti de base, mis à part leur montage sur le bâti de base via le cadre auxiliaire d'entraînement (12).
